# EUROPEAN PATENT SPECIFICATION

(11) **EP 4 361 003 B1**
(45) Date of publication and mention of the grant of the patent: **22.10.2025**
(21) Application number: 22203955.4
(22) Date of filing: 26.10.2022
(51) Int. Cl.: B62D 25/10

(54) **TRACTOR**
TRAKTOR
TRACTEUR

(43) Date of publication of application: 01.05.2024
(73) Proprietor: Kubota Corporation, Osaka-shi, Osaka 556-8601 (JP)
(72) Inventor: Nagata, Satoshi, Osaka (JP); Inoue, Ryuichi, Osaka (JP)
(74) Representative: Osha BWB

(56) References cited:
- WO-A1-2014/081196
- WO-A1-2015/093375
- JP-A- 2012 051 518
- JP-A- 2015 227 072
- JP-A- 2017 024 436
- JP-B2- 4 917 854
- JP-B2- 6 188 219

## Description

### Background

### Technical Field

The present invention relates to a tractor.

### Background Art

Among tractors, there are those that, as illustrated in patent literature 1 for example, are provided with an engine bonnet (bonnet) forming an engine compartment; a first exhaust-gas cleaning apparatus (first case) that, in the engine compartment, is provided above an engine (diesel engine) and subjects exhaust gas from the engine to a cleaning process; and a second exhaust-gas cleaning apparatus (second case) that is provided behind the engine and subjects the exhaust gas from the engine to a cleaning process.

### Prior-Art Literature

### Patent Literature

Patent Literature 1 JP 6188219 B2

### Summary of Invention

### Problem to Be Solved by Invention

In the above tractors, the first exhaust-gas cleaning apparatus is housed above the engine, and the second exhaust-gas cleaning apparatus is housed behind the engine. This increases an up-down length and a front-back length of the engine compartment and increases a volume of the engine compartment such that a large engine bonnet is necessary.

The present invention provides a tractor wherein it is easy to open and close an engine compartment despite an engine bonnet being large and wherein the engine bonnet is easy to produce.

### Means for Solving Problem

A tractor of the present invention comprises:
a vehicle body; an engine bonnet forming an engine compartment; an engine disposed in the engine compartment; a first exhaust-gas cleaning apparatus disposed above the engine in the engine compartment and cleaning exhaust gas from the engine, and a second exhaust-gas cleaning apparatus disposed behind the engine in the engine compartment and cleaning the exhaust gas from the engine; wherein the engine compartment includes: a back engine compartment portion in which the second exhaust-gas cleaning apparatus is disposed, and a front engine compartment portion disposed further toward a vehicle-body front side than the back engine compartment portion, the engine bonnet includes: a back bonnet covering the back engine compartment portion, and a front bonnet configured as a separate body from the back bonnet and covering the front engine compartment portion, and the front bonnet is swingably supported to open and close.

According to this configuration, even if an overall size of the engine bonnet is large, the engine compartment can be opened and closed by performing an operation of swinging only the front bonnet. This facilitates opening and closing the engine compartment. The engine bonnet can be produced by being divided into the front bonnet and the back bonnet. This facilitates production of the engine bonnet.

Preferably, the front bonnet is vertically swingably supported open and closed using as a fulcrum a pivot shaft core extending along a vehicle-body lateral width direction at a back end portion of the front bonnet.

According to this configuration, an operation of raising a front end side of the front bonnet opens the front bonnet, and an operation of lowering the front end side of the front bonnet closes the front bonnet. This facilitates opening and closing the front bonnet.

Preferably, the front bonnet comprises a front top plate and front side plates extending downward from left and right sides of the front top plate, the back bonnet comprises a back top plate covering the back engine compartment portion from above, and left and right back side plates covering the back engine compartment portion from both horizontal sides. The tractor further comprises: a support member, and a connecting bolt connecting a front portion of each of the back side plates to the support member, and the front bonnet is configured to cover the connecting bolt in a closed state with a back portion of each of the front side plates positioned on a horizontal outer side of the connecting bolt.

According to this configuration, the front bonnet becomes a cover covering the connecting bolt from the horizontal outer side. As such, a simple cover structure that requires no special cover can prevent, for example, water leakage into the connecting bolt.

Preferably, the back bonnet comprises a back top plate covering the back engine compartment portion from above, and left and right back side plates covering the back engine compartment portion from both horizontal sides, and the back top plate and the left and right back side plates are configured as separate bodies.

According to the present configuration, the back bonnet can be produced by being divided into the back top plate and the left and right back side plates. This facilitates production of the back bonnet.

Preferably, the second exhaust-gas cleaning apparatus is configured to clean the exhaust gas from the engine using a reducing agent, and the tractor further comprises a reducing-agent tank configured to store the reducing agent and a reducing-agent pump configured to supply the reducing agent to the second exhaust-gas cleaning apparatus, and the reducing-agent tank and the reducing-agent pump are disposed on a front side of the engine in the front engine compartment portion.

According to this configuration, a front-back length of the engine compartment becomes longer due to a space housing the reducing-agent tank and the reducing-agent pump, making an engine bonnet of a longer front-back length necessary. However, the engine bonnet can be produced by being divided into the front bonnet and the back bonnet. This facilitates production of the engine bonnet.

### [Brief Description of Drawings]

FIG. 1 is a left side view illustrating an entirety of a tractor.
FIG. 2 is a plan view illustrating the entirety of the tractor.
FIG. 3 is a side view illustrating a motor unit.
FIG. 4 is a side view illustrating support structures of a front bonnet and a back bonnet.
FIG. 5 is a front view illustrating the support structure of the back bonnet.
FIG. 6 is a perspective view illustrating the back bonnet, a bonnet support member, and a partition member in an exploded state.

### Detailed Description of Embodiments of the Invention

Embodiments of the present invention are described below based on the drawings.

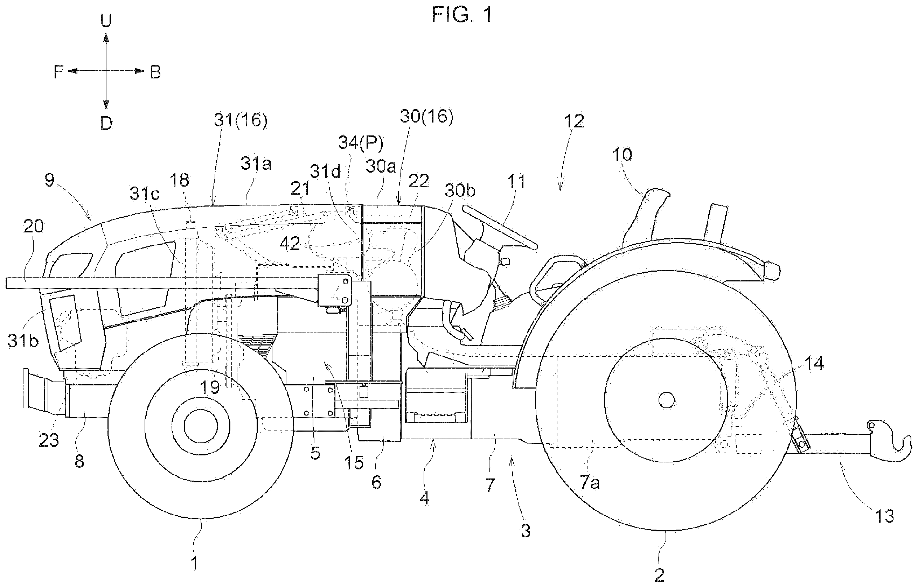

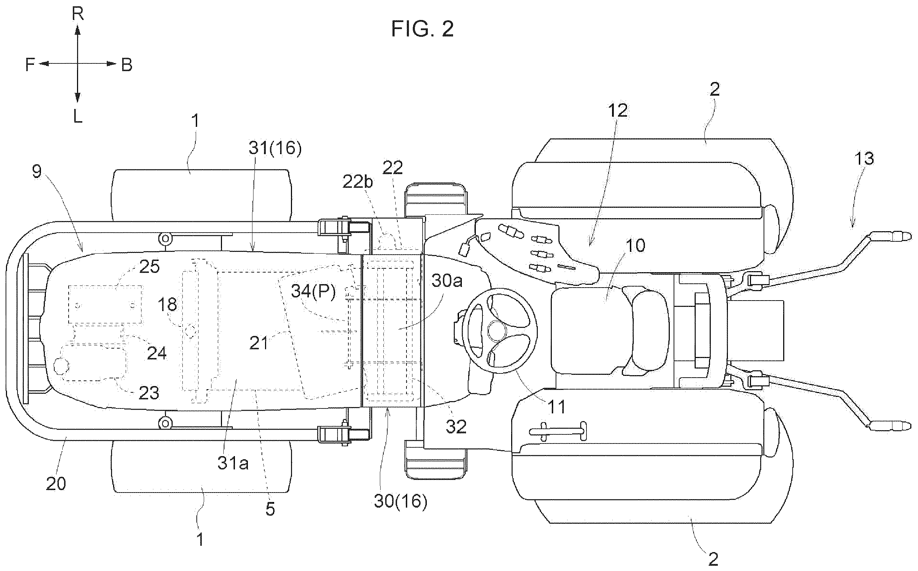

Note that in the following description, in regards to a traveling vehicle body of a tractor, the direction of arrow F illustrated in FIGS. 1 and 2 is defined as "vehicle-body front", the direction of arrow B is defined as "vehicle-body back", the direction of arrow U illustrated in FIG. 1 is defined as "vehicle-body up", the direction of arrow D is defined as "vehicle-body down", the direction of arrow L illustrated in FIG. 2 is defined as "vehicle-body left", and the direction of arrow R is defined as "vehicle-body right".

### Overall Configuration of Tractor

As illustrated in FIGS. 1 and 2, the tractor is provided with a traveling vehicle body 3 supported by a pair of left and right front wheels 1, which can be steered and driven, and a pair of left and right back wheels 2, which can be driven. A vehicle body frame 4 of the traveling vehicle body 3 is constituted by an engine 5, a flywheel housing 6 connected to a back portion of the engine 5, a clutch housing 7 connected to a back portion of the flywheel housing 6, a transmission case 7a connected to a back portion of the clutch housing 7, and a front frame 8 connected to a lower portion of the engine 5. A motor unit 9 provided with the engine 5 is formed in a front portion of the traveling vehicle body 3. A driver's seat 10 and a driving unit 12, which is provided with a steering wheel 11 whereby a steering operation of the front wheels 1 is performed, are formed in a back portion of the traveling vehicle body 3. A linking mechanism 13, which connects a work apparatus such as a rotary tilling apparatus (not illustrated) in a manner enabling a raising and lowering operation of the work apparatus, and a power takeoff shaft 14, which takes power from the engine 5 and outputs this to the connected work apparatus, are provided in a back portion of the transmission case 7a. 20 illustrated in FIGS. 1 and 2 is a ROPS frame. The ROPS frame 20 is configured to be able to change attitudes between a storage attitude, which is a collapsed state of surrounding the motor unit 9, and a usage attitude, which is a raised state.

### Configuration of Motor Unit

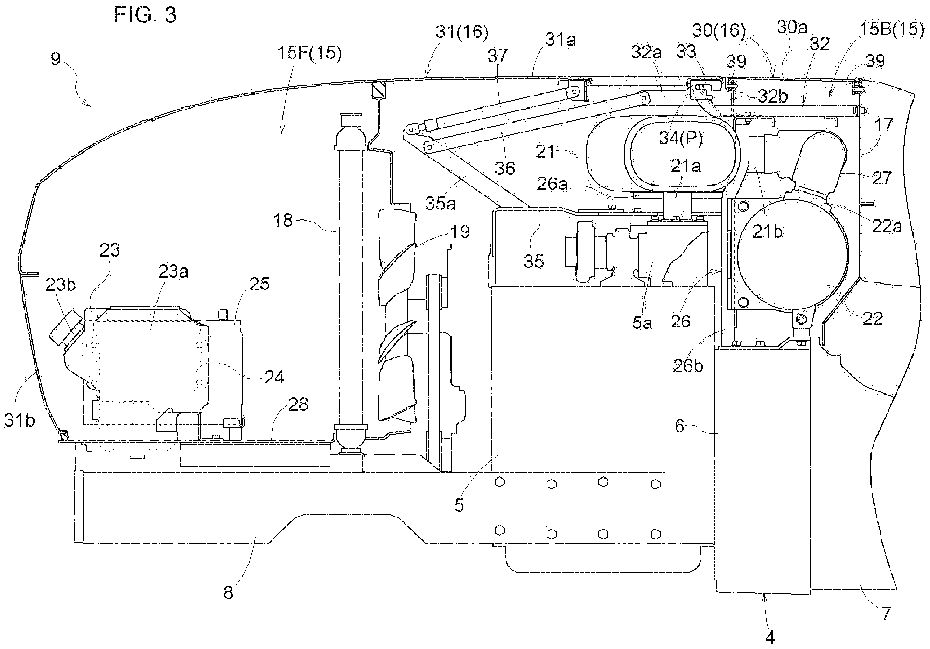

As illustrated in FIGS. 1 and 3, the motor unit 9 is provided with an engine compartment 15. The engine compartment 15 is formed by an engine bonnet 16, which covers the engine compartment 15 from above, the front, and both horizontal sides; a partition member 17 that forms a partition between the engine compartment 15 and the driving unit 12; and the like.

As illustrated in FIGS. 1, 2 and 3, the engine 5, a radiator 18 that cools the engine 5, a first exhaust-gas cleaning apparatus (DPF) 21 and second exhaust-gas cleaning apparatus (SCR) 22 that perform cleaning processes of exhaust gas exhausted by the engine 5, a reducing-agent tank 23, a reducing-agent pump 24, and a battery 25 are provided in the engine compartment 15.

### Configuration of Radiator

As illustrated in FIGS. 1, 2, and 3, the radiator 18 is provided in front of the engine 5. A blowing action of a rotary fan 19 positioned between the radiator 18 and the engine 5 introduces cooling air from outside the engine compartment 15 to inside the engine compartment and supplies the cooling air to the radiator 18. The cooling air is supplied to the radiator 18 in a state of the cooling air passing through the radiator 18 from front to back. In the radiator 18, engine cooling water is cooled by heat exchange between the supplied cooling air and the engine cooling water. The engine 5 is cooled by the cooled engine cooling water being supplied to the engine 5.

### Configurations of First Exhaust-Gas Cleaning Apparatus and Second Exhaust-Gas Cleaning Apparatus

The engine 5 is a diesel engine. As illustrated in FIGS. 2 and 3, the first exhaust-gas cleaning apparatus 21 is provided above the engine 5 in a state wherein a longitudinal direction of the first exhaust-gas cleaning apparatus is substantially parallel to a vehicle-body lateral width direction (or vehicle-body horizontal direction). A support member 26 is erected on the flywheel housing 6. A lower portion of the first exhaust-gas cleaning apparatus 21 is supported by a support arm 26a provided to the support member 26. The first exhaust-gas cleaning apparatus 21 is supported by the flywheel housing 6 of the vehicle body frame 4 via the support member 26. An exhaust-gas suctioning portion 21a, which is provided to a part on one end side, in the vehicle-body lateral width direction, of the first exhaust-gas cleaning apparatus 21, and an exhaust-gas exhausting portion 5a, which is provided to the engine 5, are connected. An exhaust-gas discharging portion 21b is provided to a part on another end side, in the vehicle-body lateral width direction, of the first exhaust-gas cleaning apparatus 21.

In the first exhaust-gas cleaning apparatus 21, the exhaust gas exhausted by the engine 5 from the exhaust-gas exhausting portion 5a is suctioned by the exhaust-gas suctioning portion 21a into the apparatus, and diesel microparticles included in the suctioned exhaust gas are collected by a collection filter (not illustrated). This performs an exhaust-gas cleaning process of decreasing the diesel microparticles. The exhaust gas subjected to the cleaning process is discharged from the exhaust-gas discharging portion 21b.

As illustrated in FIGS. 2 and 3, the second exhaust-gas cleaning apparatus 22 is provided behind the engine 5 in a state wherein a longitudinal direction of the second exhaust-gas cleaning apparatus is substantially parallel to the vehicle-body lateral width direction. A front portion of the second exhaust-gas cleaning apparatus 22 is supported by a strut portion 26b provided to the support member 26. The second exhaust-gas cleaning apparatus 22 is supported by the flywheel housing 6 of the vehicle body frame 4 via the support member 26. An exhaust-gas introduction portion 22a, which is provided to a part on one end side, in the vehicle-body lateral width direction, of the second exhaust-gas cleaning apparatus 22, and the exhaust-gas discharging portion 21b of the first exhaust-gas cleaning apparatus 21 are connected by a connecting pipe 27. An exhaust-gas discharging portion 22b is provided to a part on another end side, in the vehicle-body lateral width direction, of the second exhaust-gas cleaning apparatus 22.

In the second exhaust-gas cleaning apparatus 22, the exhaust gas discharged by the first exhaust-gas cleaning apparatus 21 from the exhaust-gas discharging portion 21b is supplied by the connecting pipe 27 to the exhaust-gas introduction portion 22a and introduced by the exhaust-gas introduction portion 22a into the apparatus, and the introduced exhaust gas is subjected to the cleaning process by a reducing agent. Specifically, aqueous urea as the reducing agent is injected into the introduced exhaust gas, hydrolyzing the exhaust gas. This performs an exhaust-gas cleaning process of decreasing nitrogen oxides included in the exhaust gas. The exhaust gas subjected to the cleaning process is exhausted from the exhaust-gas discharging portion 22b to a vehicle-body horizontal outer side.

As illustrated in FIGS. 2 and 3, the reducing-agent tank 23, the reducing-agent pump 24, and the battery 25 are provided on a front side of the engine 5. In the present embodiment, the reducing-agent tank 23, the reducing-agent pump 24, and the battery 25 are lined up in the vehicle-body lateral width direction. A support plate 28 is provided on an upper side of the front frame 8. The reducing-agent tank 23 is supported by the support plate 28 via a tank case 23a. The reducing-agent tank 23 has a pour tube 23b that extends forward and upward from an upper portion of the reducing-agent tank 23 and stores the aqueous urea as the reducing agent by the aqueous urea being poured in from the pour tube 23b. The reducing-agent pump 24 extracts the aqueous urea stored in the reducing-agent tank 23 from the reducing-agent tank 23 and supplies the extracted aqueous urea to the second exhaust-gas cleaning apparatus 22 via a hose (not illustrated) extending from the reducing-agent pump 24 to the second exhaust-gas cleaning apparatus 22.

### Configuration of Engine Bonnet

As illustrated in FIGS. 1, 2, and 3, the engine bonnet 16 has a back bonnet 30, which covers a back engine compartment portion 15B-wherein the second exhaust-gas cleaning apparatus 22 is positioned-of the engine compartment 15, and a front bonnet 31, which covers a front engine compartment portion 15F-disposed further toward a vehicle-body front side than the back engine compartment portion 15B-of the engine compartment 15. The front engine compartment portion 15F houses the first exhaust-gas cleaning apparatus 21, the engine 5, the radiator 18, the reducing-agent tank 23, the reducing-agent pump 24, and the battery 25. The front bonnet 31 and the back bonnet 30 are configured as separate bodies.

### Configuration of Front Bonnet

As illustrated in FIGS. 1, 2, and 3, the front bonnet 31 has a front top plate 31a that covers the front engine compartment portion 15F from above, a front grille portion 31b that extends downward from a front portion of the front top plate 31a and covers the front engine compartment portion 15F from the front, and left and right front side plates 31c that extend downward from both horizontal side portions of the front top plate 31a and cover the front engine compartment portion 15F from both horizontal sides.

The front bonnet 31 is supported in a state wherein it can be opened and closed.

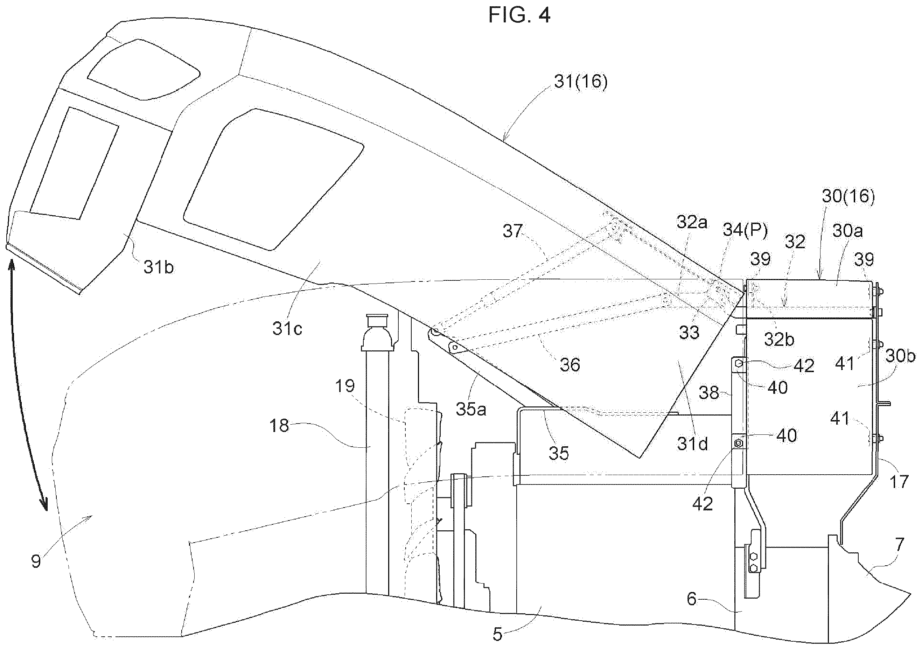

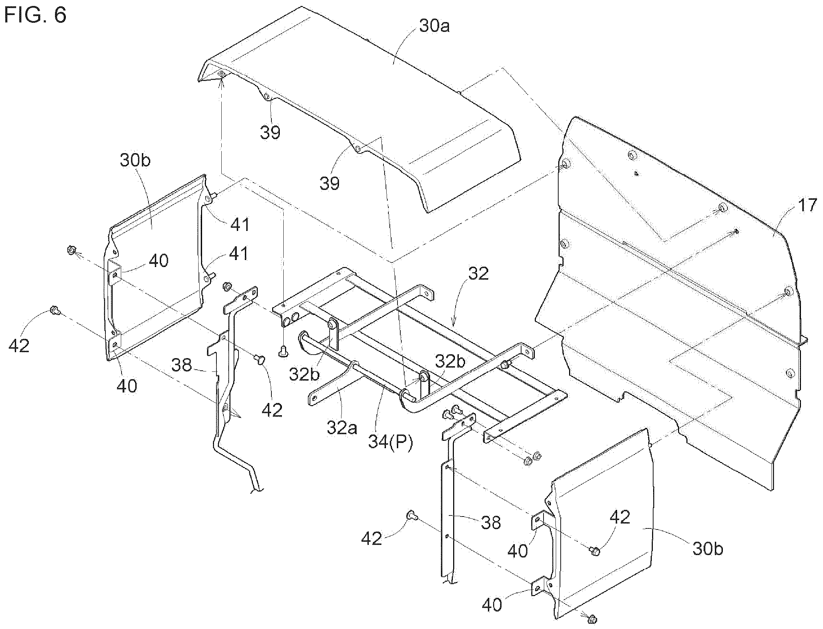

Specifically, as illustrated in FIGS. 2, 3, and 4, a bonnet support member 32 extending forward from an upper portion of the partition member 17 is provided in a back portion of the engine compartment 15. As illustrated in FIG. 6, the bonnet support member 32 is configured by combining a plurality of steel members extending in a vehicle-body longitudinal (front-back) direction and a plurality of steel members extending in the vehicle-body lateral width direction. As illustrated in FIGS. 3 and 6, a pivot shaft 34 extending in the vehicle-body lateral width direction is provided across a connecting portion 33, provided to a back end portion of the front bonnet 31, and a front portion of the bonnet support member 32. The front bonnet 31 is supported by the bonnet support member 32 in a state of being able to swing between a raised, open state-wherein, as illustrated by the solid lines in FIG. 4, the engine compartment 15 is opened by using, as a swinging fulcrum, a pivot shaft core P extending in the vehicle-body lateral width direction of the pivot shaft 34-and a lowered, closed state-wherein, as illustrated by the dot-dot-dash lines in FIG. 4, the engine compartment 15 is closed.

As illustrated in FIG. 3, a support member 35 extends forward, passing above the engine 5, from the support member 26 of the first exhaust-gas cleaning apparatus 21 and the second exhaust-gas cleaning apparatus 22. A support rod 36 that causes the support member 35 to support the bonnet support member 32 is connected across an arm portion 35a provided to a front portion of the support member 35 and an arm portion 32a provided to the front portion of the bonnet support member 32. A damper 37 that biases the front bonnet 31 to the open state is connected across the arm portion 35a and an inner portion of the front bonnet 31.

### Configuration of Back Bonnet

As illustrated in FIGS. 1, 2, and 3, the back bonnet 30 has a back top plate 30a, which covers the back engine compartment portion 15B from above, and left and right back side plates 30b, which cover the back engine compartment portion 15B from both horizontal sides. As illustrated in FIG. 6, the back top plate 30a and the left and right back side plates 30b are configured as separate bodies. The back top plate 30a and the left and right back side plates 30b are constituted by sheet-metal members.

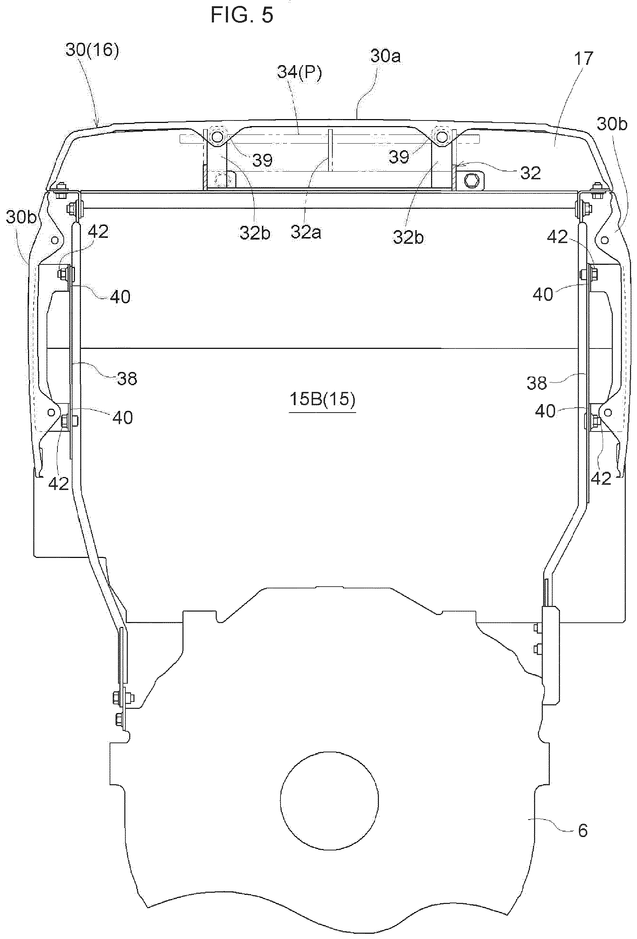

As illustrated in FIGS. 4 and 5, the back bonnet 30 is configured to be supported by the partition member 17, the bonnet support member 32, and side-plate support members 38.

Specifically, as illustrated in FIGS. 4 and 5, the side-plate support members 38 extend upward from both horizontal side portions of the flywheel housing 6. Upper end portions of the side-plate support members 38 are connected to a front side portion of the bonnet support member 32, and the side-plate support members 38 are configured to serve as support members of the bonnet support member 32.

As illustrated in FIG. 6, connecting portions 39 are respectively provided to a front portion and a back portion of the back top plate 30a. In the present embodiment, the front portion and the back portion of the back top plate 30a are each provided with two connecting portions 39. As illustrated in FIGS. 3, 4, and 5, the back top plate 30a is supported by the partition member 17 and the bonnet support member 32 by the connecting portions 39 of the back portion being pin-connected to the partition member 17 and the connecting portions 39 of the front portion being pin-connected to a support portion 32b provided to the front portion of the bonnet support member 32.

As illustrated in FIG. 6, at each of the left and right back side plate portions 30b, a front connecting portion 40 is provided to a front portion of the back side plate portion 30b and a back connecting portion 41 is provided to a back portion of the back side plate portion 30b. In the present embodiment, two front connecting portions 40 and two back connecting portions 41 are provided. As illustrated in FIGS. 4 and 5, the left and right back side plates 30b are each supported by the side-plate support member 38 and the partition member 17 by the front connecting portion 40 being connected to the side-plate support member 38 by a connecting bolt 42 and the back connecting portion 41 being pin-connected to the partition member 17.

As illustrated by the solid lines in FIG. 1 and the dot-dot-dash lines in FIG. 4, the front bonnet 31 is configured so in the closed state, a back portion 31d of the front side plate 31c of the front bonnet 31 is positioned on a horizontal outer side of the connecting bolt 42 so as to cover the connecting bolt 42. The front side plate 31c of the front bonnet 31 prevents exposure of and water leakage into the connecting bolt 42.

The engine bonnet 16 has the back bonnet 30, which covers the back engine compartment portion 15B-wherein the flywheel housing 6 is positioned-of the engine compartment 15, and the front bonnet 31, which covers the front engine compartment portion 15Fdisposed further toward the vehicle-body front side than the back engine compartment portion 15B-of the engine compartment 15. The front bonnet 31 and the back bonnet 30 are configured as separate bodies. The front bonnet 31 is supported in a state wherein it can swing open and closed.

### Other Embodiments

(1) The above embodiment illustrates an example wherein the front bonnet 31 is supported so as to be able to swing open and closed, up and down, by using as a swinging fulcrum the pivot shaft core P in the vehicle-body lateral width direction provided to the back end portion of the front bonnet 31. However, the present invention is not limited thereto. For example, the front bonnet may be supported so as to be able to swing open and closed, up and down, by using as a swinging fulcrum a pivot shaft core in the vehicle-body lateral width direction positioned in a front end portion of the front bonnet 31. Alternatively, the front bonnet may be supported so as to be able to swing open and closed by using as a swinging fulcrum a pivot shaft core positioned in a state of extending in the vehicle-body longitudinal direction to a horizontal side portion of the front bonnet 31.
(2) The above embodiment illustrates an example wherein the back top plate 30a and the left and right back side plates 30b are configured as separate bodies. However, these may be integrally configured.
(3) The above embodiment illustrates an example of adopting a configuration wherein the connecting bolt 42 is covered from the horizontal side by the back portion 31d of the front bonnet 31 in the closed state. However, this configuration does not need to be adopted.
(4) The above embodiment illustrates an example wherein the reducing-agent tank 23 and the reducing-agent pump 24 are provided on the front side of the engine 5 in the front engine compartment portion 15F, but the present invention is not limited thereto.

For example, the reducing-agent tank 23 and the reducing-agent pump 24 may be provided in any location, such as outside the engine compartment 15.

### Industrial Applicability

The present invention can be applied in tractors provided with an engine bonnet forming an engine compartment, a first exhaust-gas cleaning apparatus provided above an engine in the engine compartment, and a second exhaust-gas cleaning apparatus provided behind the engine.

## Claims

1. A tractor comprising:
a vehicle body (3);
an engine bonnet (16) forming an engine compartment (15);
an engine disposed in the engine compartment (15);
a first exhaust-gas cleaning apparatus (21) disposed above the engine in the engine compartment (15) and cleaning exhaust gas from the engine; and
a second exhaust-gas cleaning apparatus (22) disposed behind the engine in the engine compartment (15) and cleaning the exhaust gas from the engine, wherein
the engine compartment (15) includes:
a back engine compartment portion (15B) in which the second exhaust-gas cleaning apparatus (22) is disposed, and
a front engine compartment portion (15F) disposed further toward a vehicle-body front side than the back engine compartment portion (15B),
the engine bonnet (16) includes:
a back bonnet (30) covering the back engine compartment portion (15B), and
a front bonnet (31) configured as a separate body from the back bonnet (30) and covering the front engine compartment portion (15F), and
the front bonnet (31) is swingably supported to open and close.

2. The tractor of claim 1, wherein
the front bonnet (31) is vertically swingably supported to open and close using as a fulcrum a pivot shaft core (P) extending along a vehicle-body lateral width direction at a back end portion of the front bonnet (31).

3. The tractor of claim 2, wherein
the front bonnet (31) comprises:
a front top plate (31a), and
front side plates (31c) extending downward from left and right sides of the front top plate (31),
the back bonnet (30) comprises:
a back top plate (30a) covering the back engine compartment portion (15B) from above, and
left and right back side plates (30b) covering the back engine compartment portion (15B) from both horizontal sides,
the tractor further comprises:
a support member (26), and
a connecting bolt (42) connecting a front portion of each of the back side plates (30b) to the support member (26), and
the front bonnet (31) is configured to cover the connecting bolt (42) in a closed state with a back portion of each of the front side plates (31c) positioned on a horizontal outer side of the connecting bolt (42).

4. The tractor of any one of claims 1 to 3, wherein
the back bonnet (30) comprises:
a back top plate (30a) covering the back engine compartment portion (15B) from above, and
left and right back side plates (30b) covering the back engine compartment portion (15B) from both horizontal sides, and
the back top plates (30a) and the left and right back side plates (30b) are configured as separate bodies.

5. The tractor of any one of claims 1 to 4, wherein
the second exhaust-gas cleaning apparatus (22) is configured to clean the exhaust gas from the engine using a reducing agent, and
the tractor further comprises:
a reducing-agent tank (23) configured to store the reducing agent, and,
a reducing-agent pump (24) configured to supply the reducing agent to the second exhaust-gas cleaning apparatus (22),and
the reducing-agent tank (23) and the reducing-agent pump (24) are disposed on a front side of the engine in the front engine compartment portion (15F).

## Patentansprüche

1. Traktor, umfassend:
eine Karosserie (3);
eine Motorhaube (16), die einen Motorraum (15) ausbildet;
einen Motor, der in dem Motorraum (15) angeordnet ist;
eine erste Abgasreinigungsvorrichtung (21), die über dem Motor im Motorraum (15) angeordnet ist und Abgas aus dem Motor reinigt; und
eine zweite Abgasreinigungsvorrichtung (22), die hinter dem Motor im Motorraum (15) angeordnet ist und Abgas aus dem Motor reinigt, wobei
der Motorraum (15) Folgendes umfasst:
einen hinteren Motorraumabschnitt (15B), in dem die zweite Abgasreinigungsvorrichtung (22) angeordnet ist, und
einen vorderen Motorraumabschnitt (15F), der näher an der Vorderseite der Karosserie angeordnet ist als der hintere Motorraumabschnitt (15B),
die Motorhaube (16) Folgendes umfasst:
eine hintere Haube (30), die den hinteren Motorraumabschnitt (15B) abdeckt, und
eine vordere Haube (31), die als von der hinteren Haube (30) separater Körper ausgelegt ist und den vorderen Motorraumabschnitt (15F) abdeckt, und
die vordere Haube (31) zum Öffnen und Schließen schwenkbar gelagert ist.

2. Traktor nach Anspruch 1, wobei
die vordere Haube (31) zum Öffnen und Schließen vertikal schwenkbar gelagert ist und als Drehpunkt einen Drehachsenkern (P) verwendet, der sich entlang einer lateralen Karosseriebreitenrichtung an einem hinteren Abschnitt der vorderen Haube (31) erstreckt.

3. Traktor nach Anspruch 2, wobei
die vordere Haube (31) Folgendes umfasst:
eine vordere Deckplatte (31a) und
vordere Seitenplatten (31c), die sich von der linken und rechten Seite der vorderen Deckplatte (31) nach unten erstrecken,
die hintere Haube (30) Folgendes umfasst:
eine hintere Deckplatte (30a), die den hinteren Motorraumabschnitt (15B) von oben abdeckt, und
eine linke und rechte hintere Seitenplatte (30b), die den hinteren Motorraumabschnitt (15B) von beiden horizontalen Seiten abdecken,
der Traktor ferner Folgendes umfasst:
ein Stützelement (26) und
einen Verbindungsbolzen (42), der einen vorderen Abschnitt jeder der hinteren Seitenplatten (30b) mit dem Stützelement (26) verbindet, und
die vordere Haube (31) dazu ausgelegt ist, den Verbindungsbolzen (42) in einem geschlossenen Zustand abzudecken, wobei ein hinterer Abschnitt jeder der vorderen Seitenplatten (31c) an einer horizontalen Außenseite des Verbindungsbolzens (42) angeordnet ist.

4. Traktor nach einem der Ansprüche 1 bis 3, wobei
die hintere Haube (30) Folgendes umfasst:
eine hintere Deckplatte (30a), die den hinteren Motorraumabschnitt (15B) von oben abdeckt, und
eine linke und rechte hintere Seitenplatte (30b), die den hinteren Motorraumabschnitt (15B) von beiden horizontalen Seiten abdecken, und
die hinteren Deckplatten (30a) und die linke und rechte hintere Seitenplatte (30b) als getrennte Körper ausgelegt sind.

5. Traktor nach einem der Ansprüche 1 bis 4, wobei
die zweite Abgasreinigungsvorrichtung (22) dazu ausgelegt ist, Abgas vom Motor mittels eines Reduktionsmittels zu reinigen, und
der Traktor ferner Folgendes umfasst:
einen Reduktionsmitteltank (23), der dazu ausgelegt ist, das Reduktionsmittel zu speichern, und
eine Reduktionsmittelpumpe (24), die dazu ausgelegt ist, der zweiten Abgasreinigungsvorrichtung (22) das Reduktionsmittel zuzuführen, und
der Reduktionsmitteltank (23) und die Reduktionsmittelpumpe (24) an der Vorderseite des Motors im vorderen Motorraumabschnitt (15F) angeordnet sind.

## Revendications

1. Tracteur comprenant :
une carrosserie de véhicule (3) ;
un capot moteur (16) formant un compartiment moteur (15) ;
un moteur disposé dans le compartiment moteur (15) ;
un premier appareil d'épuration des gaz d'échappement (21) disposé au-dessus du moteur dans le compartiment moteur (15) et épurant les gaz d'échappement provenant du moteur ; et
un deuxième appareil d'épuration des gaz d'échappement (22) disposé derrière le moteur dans le compartiment moteur (15) et épurant les gaz d'échappement provenant du moteur, dans lequel
le compartiment moteur (15) inclut :
une partie arrière de compartiment moteur (15B) dans laquelle le deuxième appareil d'épuration des gaz d'échappement (22) est disposé, et
une partie avant de compartiment moteur (15F) disposée vers un côté avant de la carrosserie de véhicule plus loin que la partie arrière de compartiment moteur (15B),
le capot moteur (16) inclut :
un capot arrière (30) couvrant la partie arrière de compartiment moteur (15B), et
un capot avant (31) configuré comme un corps séparé du capot arrière (30) et couvrant la partie avant de compartiment moteur (15F), et
le capot avant (31) est supporté de manière pivotante pour s'ouvrir et se fermer.

2. Tracteur selon la revendication 1, dans lequel
le capot avant (31) est supporté de manière oscillante verticalement pour s'ouvrir et se fermer en utilisant en tant qu'un point d'appui un noyau d'arbre pivot (P) s'étendant le long d'une direction de largeur latérale de carrosserie de véhicule au niveau d'une partie d'extrémité arrière du capot avant (31).

3. Tracteur selon la revendication 2, dans lequel
le capot avant (31) comprend :
une plaque supérieure avant (31a), et
des plaques latérales avant (31c) s'étendant vers le bas à partir des côtés gauche et droit de la plaque supérieure avant (31),
le capot arrière (30) comprend :
une plaque supérieure arrière (30a) couvrant la partie arrière de compartiment moteur (15B) à partir du haut, et
des plaques latérales arrière gauche et droite (30b) couvrant la partie arrière de compartiment moteur (15B) à partir des deux côtés horizontaux,
le tracteur comprend en outre :
un élément de support (26), et
un boulon de liaison (42) reliant une partie avant de chacune des plaques latérales arrière (30b) à l'élément de support (26), et
le capot avant (31) est configuré pour couvrir le boulon de liaison (42) dans un état fermé avec une partie arrière de chacune des plaques latérales avant (31c) positionnée sur un côté extérieur horizontal du boulon de liaison (42).

4. Tracteur selon l'une quelconque des revendications 1 à 3, dans lequel
le capot arrière (30) comprend :
une plaque supérieure arrière (30a) couvrant la partie arrière de compartiment moteur (15B) à partir du haut, et
des plaques latérales arrière gauche et droite (30b) couvrant la partie arrière de compartiment moteur (15B) à partir des deux côtés horizontaux, et
les plaques supérieures arrière (30a) et les plaques latérales arrière gauche et droite (30b) sont configurées comme des corps séparés.

5. Tracteur selon l'une quelconque des revendications 1 à 4, dans lequel
le deuxième appareil d'épuration des gaz d'échappement (22) est configuré pour épurer les gaz d'échappement provenant du moteur à l'aide d'un agent réducteur, et
le tracteur comprend en outre :
un réservoir d'agent réducteur (23) configuré pour stocker l'agent réducteur, et
une pompe à agent réducteur (24) configurée pour fournir l'agent réducteur au deuxième appareil d'épuration des gaz d'échappement (22), et
le réservoir d'agent réducteur (23) et la pompe d'agent réducteur (24) sont disposés sur un côté avant du moteur dans la partie avant de compartiment moteur (15F).
